# EUROPÄISCHE PATENTSCHRIFT

(11) **EP 2 039 411 B1**
(45) Veröffentlichungstag und Bekanntmachung des Hinweises auf die Patenterteilung: **05.03.2014**
(21) Anmeldenummer: 08164672.1
(22) Anmeldetag: 19.09.2008
(51) Int. Cl.: B01D 39/16, B01D 39/20

(54) **Getriebeölfilter mit abströmseitiger Meltblownlage**
Gearbox oil filter with exhaust flow meltblow assembly
Filtre à huile de boîte de vitesse doté d'une position d'extrusion-soufflage du côté de la sortie de flux

(30) Priorität: 19.09.2007 DE 202007013215 U
(43) Veröffentlichungstag der Anmeldung: 25.03.2009
(73) Patentinhaber: MANN+HUMMEL GmbH, 71638 Ludwigsburg (DE)
(72) Erfinder: Wagner, Claudia, 70190, Stuttgart (DE); Banzhaf, Harald, 70614, Stuttgart (DE); Klein, Gunnar-Marcel, 71720, Oberstenfeld (DE); Schmid, Thorsten, 71374, Stuttgard (DE)

(56) Entgegenhaltungen:
- WO-A-99/55422
- US-A- 4 676 807
- US-A- 4 759 782

## Beschreibung

### Technisches Gebiet

Die Erfindung betrifft einen Getriebeölfilter.

### Stand der Technik

Bekannt sind Getriebeölfilter mit einer Glasfaserlage, die beidseitig mit einem Spunbondvlies kaschiert ist. Das Spunbondvlies verbessert die Handhabbarkeit der Glasfaserlage, z.B. beim Herstellungsprozess des Filters.

Bekannt sind Mehrschichtfilter für Flüssigkeiten, z.B. aus dem europäischen Patent EP 1 035 902 in dem ein Meltblown-Vlies mit einer abströmseitigen Lage aus celluslosehaltigem Filterpapier beschrieben ist.

Aus der Luftfiltration, z.B. aus der DE 100 133 15 ist bekannt, dass aus Glasfasermedien Faserbruchstücke in den Reinmedienbereich gelangen. Daher wird das Ersetzten von Glasfasermedien durch andere Filterstoffe empfohlen. Ein solches Freisetzten konnte auch bei mit Spunbondvlies kaschierten Glasfasermedien bei der Flüssigkeitsfiltration beobachtet werden.

Das nicht vorveröffentlichte Dokument EP2006009 (Veröffentlichungstag: 24.12.2008, Anmeldetag: 05.06.2008, Priorität: 11.06.2007) beschreibt ein Filter mit einer Glasfaser- und einer Meltblownschicht zum Filtern von Hydrauliköl.

Aufgabe der Erfindung ist es, das Freisetzen von Glasfasern oder Glasfaserbruchstücken in das filtrierte Fluid bei einem Getriebeölfilter mit einer Filtrationsschicht aus Glasfasermedium zu verhindern oder zu verringen.

### Offenbarung der Erfindung

Die Aufgabe wird durch einen Getriebeölfilter gemäß Anspruch 1 gelöst. Eine Meltblownauflage abströmseitig von der Filtrationsschicht aus einem Glasfasermedium ist in der Lage das Freisetzen der Glasfasern zumindest stark zu verringern und erlaubt es so ein Glasfasermedium zur Filtration einzusetzen.

Häufig ist bei dem Getriebeölfilter auf einer oder beiden Seiten der Filtrationsschicht aus Glasfasermedium eine Spunbondschicht zur besseren Handhabbarkeit der Filtrationsschicht aus Glasfasermedium aufgebracht ist.

Bevorzugt hat die die Filtrationsschicht aus einem Glasfasermedium einen Dicke von 0,3 bis 1,0 mm für die Anwendung bei einem Getriebeölfilter.

Bevorzugt hat die die Filtrationsschicht aus einem Glasfasermedium ein Flächengewicht von 40 bis 110 g/m² bei einem Getriebeölfilter.

Bevorzugt hat die Meltblownschicht eine Dicke von 0,2 bis 0,7 mm.

Bevorzugt hat die Meltblownschicht ein Flächengewicht von 20 bis 60 g/m².

Bevorzugt ist weist das Spunbondvlies eine Dicke von 0,05 bis 0,2 mm auf.

Bevorzugt weist das Spunbondvlies ein Flächengewicht von 10 bis 50 g/m² auf.

Das Glasfasermedium besteht bevorzugt aus mindestens 90 Gewichts-% Glasfasern.

Das Glasfasermedium enthält bevorzugt Glasfasern mit einem Durchmesser zwischen 1 µm und 8 µm und einer Faserlänge zwischen 100 µm und 1000 µm.

Die abströmseitige Meltblownschicht enthält bevorzugt mindestens 90 Gewichts-% Polyesterfasern mit einem Durchmesser von 1 µm bis 30 µm.

In einer bevorzugten Ausführungsform ist die Meltblownschicht auf die Filtrationsschicht aus Glasfasermedium oder auf die Spunbondvliesschicht auf der Glasfaserlage kaschiert oder direkt im Meltblownverfahren aufgebracht.

In einer bevorzugten Ausführungsform ist die Schichtfolge umfassend die Filtrationsschicht aus Glasfasermedium, die abströmseitige Meltblownlage und eventuell die eine oder zwei Spunbondschichten im Filter in gefalteter Form eingebracht.

### Kurze Beschreibung der Zeichnungen

Fig. 1 zeigt eine Filtrationsschicht aus einem Glasfasermedium mit einer abströmseitig von der Filtrationsschicht angebrachte Meltblownschicht

Fig. 2 zeigt ein zeigt eine Filtrationsschicht aus einem Glasfasermedium mit einer einseitigen Spunbondvliesauflage und mit einer abströmseitig von der Filtrationsschicht angebrachte Meltblownschicht

Fig. 3 zeigt eine Filtrationsschicht aus einem Glasfasermedium mit einer zweiseitigen Spunbondvliesauflage und mit einer abströmseitig von der Filtrationsschicht angebrachten Meltblownschicht.

### Ausführungsform(en) der Erfindung

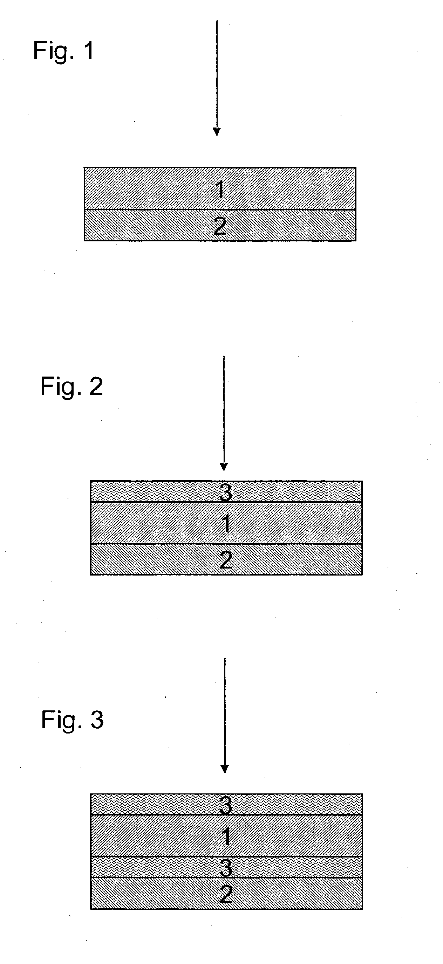

Abbildungen 1 bis 3 zeigen unterschiedliche Schichtfolgen, umfassend eine Glasfaserlage 1 sowie jeweils abströmseitig einer Meltblownlage 2. Zusätzlich kann auf einer oder beider Seiten der Glasfaserlage eine Vlieslage aus einem Spunbondvlies 3 aufgebracht sein. Die Spunbondvlieslage verbessert die Handhabbarkeit der Glasfaserlage beim Herstellungsprozess und hat eine dicke von 0,05 bis 0,2 mm bei einem Flächengewicht von 10 bis 50 g/m².

In den in den Figuren dargestellten Ausführungsformen besteht die Filtrationsschicht aus Glasfasern. Die Glasfasern haben einen Durchmesser von etwa 1 bis 8 µm und eine Länge von etwa 100 bis 1000µm. Andere Durchmesser und Längen sind in Abhängigkeit des Filtrationszwecks möglich. Die Glasfaserschicht hat eine Dicke zwischen 0,3 und 1,0 mm bei einem Flächengewicht von 40 bis 110 g/m². Dicke und Flächengewicht wird der Fachmann je nach Anwendung auswählen.

Die bevorzugte Meltblownschicht erbringt in dieser Ausführungsform keine Filtrationsleistung für das zu reinigende Fluid sondern dient lediglich zur Zurückhaltung der Glasfasern. In einer anderen Ausführungsform kann die Meltblownlage auch mit Filtrationseigenschaften für das zu reinigende Fluid ausgestattet sein.

Bevorzugt ist die Meltblownlage in einer Dicke zwischen 0,2 und 0,7 mm und mit einem Flächengewicht von 20 bis 60 g/m² aus Polyester ausgeführt, wobei die Meltblownfasern einen Durchmesser von im Wesentlichen 1 bis 30 µm, insbesondere von 1 bis 10 µm, haben.

## Patentansprüche

1. Getriebeölfilter zur Filtration einer Flüssigkeit umfassend
a. eine Filtrationsschicht aus einem Glasfasermedium;
b. eine abströmseitig von der Filtrationsschicht angebrachte Meltblownschicht zur Verhinderung oder Verminderung des Eintrags von Glasfasern in die zu filtrierende Flüssigkeit.

2. Getriebeölfilter nach Anspruch 1, wobei auf einer oder beiden Seiten der Filtrationsschicht aus Glasfasermedium eine Spunbondschicht zur besseren Handhabbarkeit der Filtrationsschicht aus Glasfasermedium aufgebracht ist.

3. Getriebeölfilter nach einem der vorherigen Ansprüche, wobei die Filtrationsschicht ein Glasfasermedium mit einer Dicke von 0,3 bis 1,0 mm und einem Flächengewicht von 40 bis 110 g/m² aufweist.

4. Getriebeölfilter nach einem der vorhergehenden Ansprüche, wobei die Meltblownschicht eine Dicke von 0,2 bis 0,7 mm und ein Flächengewicht von 20 bis 60 g/m² aufweist.

5. Getriebeölfilter nach einem der Ansprüche 2 bis 4, wobei die eine oder zwei Spunboundschichten eine Dicke von 0,05 bis 0,2 mm und ein Flächengewicht von 10 bis 50 g/m² aufweisen.

6. Getriebeölfilter nach einem der vorherigen Ansprüche, wobei das Glasfasermedium mindestens 90 Gewichts-% Glasfasern mit einem Durchmesser zwischen 1 µm und 8 µm und einer Faserlänge zwischen 100 µm und 1000 µm enthält.

7. Getriebeölfilter nach Anspruch einem der vorherigen Ansprüche, wobei die Meltblownschicht mindestens 90 Gewichts-% Polyesterfasern mit einem Durchmesser von 1 µm bis 30 µm enthält.

8. Getriebeölfilter nach einem der vorherigen Ansprüche, wobei die Meltblownschicht auf die Filtrationsschicht aus Glasfasermedium kaschiert ist oder direkt im Meltblownverfahren aufgebracht ist.

9. Getriebeölfilter nach einem der Ansprüche 2 bis 7, wobei die Meltblownschicht auf die Spunbondschicht kaschiert ist oder direkt im Meltblownverfahren aufgebracht ist.

## Claims

1. Transmission oil filter for filtering a liquid, comprising
a. a filtration layer made of a glass fiber medium
b. a meltblown layer applied on the outflow side of the filtration layer for preventing or reducing the input of glass fibers into the liquid to be filtered.

2. Transmission oil filter according to claim 1, wherein a spunbond layer for a better handling of the filtration layer made of glass fiber medium is applied on one or both sides of the filtration layer made of glass fiber medium.

3. Transmission oil filter according to one of the above claims, wherein the filtration layer features a glass fiber medium with a thickness of 0.3 to 1.0 mm and a grammage of 40 to 110 g/m².

4. Transmission oil filter according to one of the above claims, wherein the meltblown layer features a thickness of 0.2 to 0.7 mm and a grammage of 20 to 60 g/m².

5. Transmission oil filter according to one of the claims 2 to 4, wherein the one or two spunbond layers feature a thickness of 0.05 to 0.2 mm and a grammage of 10 to 50 g/m².

6. Transmission oil filter according to one of the above claims, wherein the glass fiber medium contains at least glass fibers of 90 % by weight with a diameter between 1 µm and 8 pm and a fiber length between 100 µm and 1000 pm.

7. Transmission oil filter according to one of the above claims, wherein the meltblown layer contains at least polyester fibers of 90 % by weight with a diameter between 1 µm and 30 µm.

8. Transmission oil filter according to one of the above claims, wherein the meltblown layer is laminated on the filtration layer made of glass fiber medium or directly applied to the meltblown layer.

9. Transmission oil filter according to one of the claims 2 to 7, wherein the meltblown layer is laminated on the spunbond layer or directly applied by the meltblown process.

## Revendications

1. Filtre à huile à engrenages pour la filtration d'un liquide, comprenant
a. une couche de filtration faite d'un support en fibres de verre ;
b. une couche de fibres fondues-soufflées montée du côté sortie de la couche de filtration et destinée à empêcher ou réduire la pénétration de fibres de verre dans le liquide à filtrer.

2. Filtre à huile à engrenages selon la revendication 1, une couche de fibres filées-liées étant montée sur un côté ou sur les des deux côtés de la couche de filtration constituée du support en fibres de verre en vue d'améliorer la maniabilité de la couche de filtration constituée du support en fibres de verre.

3. Filtre à huile à engrenages selon l'une des revendications précédentes, la couche de filtration présentant un support en fibres de verre d'une épaisseur de 0,3 à 1,0 mm et d'un poids de 40 à 110 g/m².

4. Filtre à huile à engrenages selon l'une des revendications précédentes, la couche de fibres fondues-soufflées présentant une épaisseur de 0,2 à 0,7 mm et un poids de 20 à 60 g/m².

5. Filtre à huile à engrenages selon l'une des revendications 2 à 4, la couche filée-liée ou les deux couches filées-liées présentant une épaisseur de 0,05 à 0,2 mm et un poids de 10 à 50 g/m².

6. Filtre à huile à engrenages selon l'une des revendications précédentes, le support en fibres de verre contenant au moins 90 % en poids de fibres de verre d'un diamètre entre 1 µm et 8 pm et une longueur de fibres entre 100 µm et 1000 pm.

7. Filtre à huile à engrenages selon l'une des revendications précédentes, la couche de fibres fondues-soufflées contenant au moins 90 % en poids de fibres de polyester d'un diamètre entre 1 µm et 30 µm.

8. Filtre à huile à engrenages selon l'une des revendications précédentes, la couche de fibres fondues-soufflées étant contrecollée sur la couche de filtration faite du support en fibres de verre ou montée directement par fusion-soufflage.

9. Filtre à huile à engrenages selon l'une des revendications 2 à 7, la couche de fibres fondues-soufflées étant contrecollée sur la couche de fibres filées-liées ou montée directement par fusion-soufflage.
